# EUROPEAN PATENT APPLICATION

(11) **EP 0 755 765 A1**
(43) Date of publication of application: **29.01.1997**
(21) Application number: 95201984.2
(22) Date of filing: 19.07.1995
(51) Int. Cl.: B29C 45/14

(54) **Method for producing a cloth-drawing roller for knitting machines, weaving machines and the like, and cloth-drawing roller produced using this method**

(71) Applicant: S.A.M.M. di S. Ferraris & C. S.n.c., I-15040 Fr. Santa Maria del Tempio Casale Monferrato (Alessandria) (IT)
(72) Inventor: Avonto, Piero, c/o S.A.M.M. di, I-15040 Fr. Santa Maria del Tempio (IT)
(74) Representative: Aprà, Mario

(57) **Abstract**

The method is characterized in that a rigid cylindrical body, which is axially bored, made of plastic for example, and forming a support body for a cloth-drawing roller, is placed as an insert in a mould for injecting a friction material, for example rubber, in order to cover the external cylindrical lateral surface thereof, the said friction material, for example rubber, then being injected into the said mould so as to cover the external cylindrical lateral surface of the said support body with a uniform layer of friction material which adheres monolithically to the said support body.

The cloth-drawing roller produced comprises:
- a rigid support body (11), which is cylindrical and axially hollow (bored at 11.1), made of plastic for example, and
- an annular covering (12) made of friction material, for example rubber, which adheres monolithically to the external cylindrical lateral surface (11.3) of the said support body (11).

## Description

The present invention relates to a method for producing a cloth-drawing roller for knitting machines, weaving machines and the like. The invention also relates to the cloth-drawing roller produced using the abovementioned method.

In knitting machines, for example rectilinear knitting machines, in weaving machines (looms), in conventional and shuttleless machines, in twisting machines, in ribbon-weaving machines, in fully-fashioned knitting looms and the like, the cloth formed is drawn from the machine under constant and even pressure by means of a plurality of rollers, known as cloth-drawing rollers, which are for example mounted coaxially and side by side on the same shaft.

Known cloth-drawing rollers essentially comprise:
- a rigid cylindrical support body, which is axially hollow (bored) and is mounted on a roller-carrying shaft and is, for example, made of plastic, and
- an elastic annular band, made of friction material, for example rubber, which fits tightly and elastically over the cylindrical lateral surface of the support body in the form of a covering.

However, the working conditions and the substances contained in and used to treat textiles, knitted products or similar articles, tend to cause the elastic band to become loose over time, thereby resulting in the said band undesirably slipping off the cylindrical body which carries it, for example, during operation.

In order to overcome this serious drawback, the cylindrical support body has, for example, been fitted with annular retention edges in the form of flanges which prevent the slackened elastic band from axially falling off. Nevertheless, this arrangement has not proved of great use in practice.

Using the concept of the abovementioned drawbacks as a starting point, the present invention proposes to eliminate these disadvantages.

The main object of the present invention is, therefore, to provide a method for producing a cloth-drawing roller for knitting machines, weaving machines and the like, which ensures a strong, stable and long-lasting adhesion of the covering made of friction material to the cylindrical support body of the cloth-drawing roller.

A further object is to provide a cloth-drawing roller, produced using the abovementioned method, which has improved characteristics in terms of durability and working efficiency, compared with the conventional cloth-drawing roller, for the same or less technical and financial outlay.

With these objects in mind, the present invention provides a method for producing a cloth-drawing roller for knitting machines, weaving machines and the like, the essential characteristic of which forms the subject of Claim 1, which is understood as being integrally included herein.

The cloth-drawing roller produced using the abovementioned method is characterized in Claim 3, which is similarly understood as being integrally included herein.

Additional advantageous characteristics will be evident from the subclaims, which are also understood as being integrally included herein.

The method for producing a cloth-drawing roller for knitting machines, weaving machines and the like, according to the present invention, is essentially characterized in that a rigid cylindrical body, which is axially hollow (bored), made of plastic for example, and forming a support body for a cloth-drawing roller, is placed as an insert in a mould for injecting a friction material, for example rubber, in order to cover the external cylindrical lateral surface thereof, the said friction material, for example rubber, then being injected into the said mould so as to cover the external cylindrical lateral surface of the said support body with a uniform layer of friction material which adheres monolithically to the said support body.

In order to give greater adhesion, the friction material is injected through a plurality of injection channels which open into different areas on the external cylindrical lateral surface of the said support body, acting as an insert in the injection mould.

The friction material injected, forming the covering which adheres monolithically to the said support body, is for example forprene.

The present invention is described in detail in the following text with reference to the appended drawings, which are provided solely as a nonlimiting example and in which:
- Figures 1 and 2 show elevations, seen from opposite sides, of an example of a cloth-drawing roller produced using the method according to the invention;
- Figure 3 is a sectional view thereof along the line III-III of Fig. 1.

In the drawings, the reference numeral 10 indicates an example of a cloth-drawing roller as a whole, which roller is produced using the method according to the present invention.

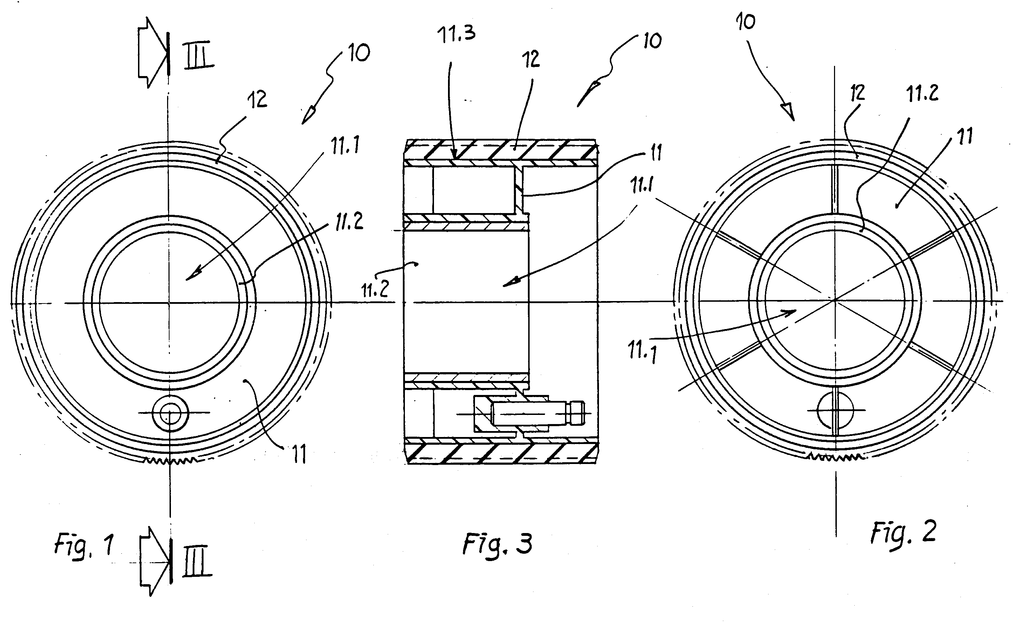

The said cloth-drawing roller 10 essentially comprises:
- a rigid support body 11, which is cylindrical and axially hollow (bored) at 11.1. The said support body 11 is, for example, made of plastic. The axial cavity 11.1 is covered by a sleeve 11.2 made of antiwear metal, so that the said support body can be fitted axially onto a roller-carrying shaft (not illustrated);
- an annular covering 12 made of friction material, for example rubber, which adheres monolithically to the external cylindrical lateral surface 11.3 (Fig. 3) of the said support body 11 to which it is applied by means of the method according to the invention. In the example, the said annular covering 12 has an axially grooved external surface. It could, however, have any other surface form, or it could have a smooth external surface. The said annular covering 12 is, for example, made of forprene.

It goes without saying that rubbers of different hardnesses or other friction materials can be used for the said covering.

The cloth-drawing roller 10 enables the drawbacks encountered with known cloth-drawing rollers to be overcome effectively, ensuring a proportionally longer service life and a greater working efficiency, for a smaller technical and financial outlay.

In practice, numerous variations can, of course, be made with respect to the embodiment described and illustrated herein, given solely by way of nonlimiting example, without thereby departing from the scope of the invention and therefore from the domain of the present industrial patent.

## Claims

1. Method for producing a cloth-drawing roller for knitting machines, weaving machines and the like, characterized in that a rigid cylindrical body, which is axially hollow (bored), made of plastic for example, and forming a support body for a cloth-drawing roller, is placed as an insert in a mould for injecting a friction material, for example rubber, in order to cover the external cylindrical lateral surface thereof, the said friction material, for example rubber, then being injected into the said mould so as to cover the external cylindrical lateral surface of the said support body with a uniform layer of friction material which adheres monolithically to the said support body.

2. Method according to Claim 1, characterized in that, in order to give greater adhesion, the friction material is injected through a plurality of injection channels which open into different areas on the external cylindrical lateral surface of the said support body, acting as an insert in the injection mould.

3. Cloth-drawing roller produced using the method according to Claim 1 or 2, characterized in that it essentially comprises:
- a rigid support body (11), which is cylindrical and axially hollow (bored at 11.1), made of plastic for example, and
- an annular covering (12) made of friction material, for example rubber, which adheres monolithically to the external cylindrical lateral surface (11.3) of the said support body (11).

4. Cloth-drawing roller according to Claim 3, in which the said annular covering is, for example, made of forprene.
